(19) Europäisches Patentamt

European Patent Office

Office européen des brevets

(11) Publication number : **0 505 048 A2**

(12) **EUROPEAN PATENT APPLICATION**

(21) Application number : **92301663.8**

(22) Date of filing : **27.02.92**

(51) Int. Cl.⁵ : **H04L 27/12, H04B 10/14**

(30) Priority : **21.03.91 GB 9106045**

(43) Date of publication of application :
**23.09.92 Bulletin 92/39**

(84) Designated Contracting States :
**DE FR NL SE**

(71) Applicant : **NORTHERN TELECOM LIMITED**
**World Trade Center of Montreal, 380 St.**
**Antoine Street West 8th Floor**
**Montreal, Quebec H2Y 3Y4 (CA)**

(72) Inventor : **Large, Timothy Andrew**
**23 Dengaine Close**
**Papworth Everard, Cambridge CB3 8UH (GB)**

(74) Representative : **Laurence, Simon French et al**
**Northern Telecom Europe Limited Patents and**
**Licensing West Road**
**Harlow, Essex CM20 2SH (GB)**

(54) **Optical FSK modulator.**

(57) When converting an FSK output from an injection laser (2) into 1M (intensity modulation) by passage of the light through a Mach Zehnder interferometer (5), the conversion efficiency is regulated using a first feedback loop (7) to stablilise the laser's centre frequency at a half-intensity point on the spectral characteristic of the interferometer, and optionally a second loop (31) to regulate the frequency difference of the FSK so that the two FSK frequencies reside respectively at a maximum and a minimum of the characteristic. The first loop uses a low frequency modulation of the FSK frequency difference to derive its error control signal.

Fig.1.

EP 0 505 048 A2

This invention relates to optical transmitter modulation in which the modulation is impressed as frequency shift keying (FSK) that is then transmitted through an optical discriminator for converting the FSK to intensity modulation (IM). This kind of modulation is described for instance in GB 2 107 147 A. When used for modulation of the emission of an injection laser, this two-stage manner of achieving an intensity modulated signal can produce a signal whose high level bits have a reduced spectral width in comparison with that of those produced by direct modulation of the injection laser drive current. This can be advantageous in reducing the effects of dispersion in single mode waveguide non-coherent systems.

The FSK is converted to IM by arranging for the frequency spectrum of the optical filter characteristic of the optical discriminator to be matched with the FSK output frequencies so that these frequencies are transmitted by the discriminator with widely different optical attenuations. Particularly in the case of injection lasers, the unregulated output frequency is liable to drift with time so that, in a matter of perhaps only a few minutes, the frequency has drifted by amounts as large as the frequency difference of the FSK. In these circumstances steps need to be taken either to stabilise the optical output of the injection laser against frequency drifts of this magnitude, or some form of feedback control loop is required to provide active matching of the FSK output with the spectral characteristic of the discriminator.

One method for deriving feedback signal for regulating the FSK output frequencies of an injection laser to match the spectral characteristic of a discriminator taking the form of a Mach Zehnder interferometer has been described by E.G. Bryant et al in an article entitled 'A 1.2 Gbit/s optical FSK field trial demonstration' (Br Telecom Technol J Vol 8 No 2 pp 18-26, April 1990). This method involves impressing a low frequency modulation upon the centre frequency of the injection laser, and using the resulting modulation of an output of the Mach Zehnder interferometer to provide a feedback control signal which regulates the injection laser bias current. A disadvantage of this method is that the feedback system provides two possible operating conditions: one in which it operates such that the higher frequency FSK bits are transmitted by the discriminator as high level IM bits, and the other in which they are transmitted as low level IM bits. The present invention is directed to transmitters in which this kind of ambiguity is avoided, and which are additionally able to employ in their feedback loops monitor photodiodes that are too slow in response to resolve individual data bits.

According to the present invention there is provided an optical transmitter including an optical source adapted to provide a frequency shift keyed (FSK) optical output in response to the application thereto of a digital modulating signal, which FSK output is fed through an optical discriminator to convert the modulation of the optical output from FSK to intensity modulation (IM), which optical transmitter includes a feedback control loop adapted to regulate the spectral relationship between the centre frequency of the FSK optical output of the optical source and the frequency spectrum of the optical filter characteristic of the optical discriminator, characterised in that the feedback control loop includes means to impress an amplitude modulation upon the digital modulation signal applied to the optical source.

The feedback loop may operate to regulate the spectral characteristic of the discriminator, for instance, when a Mach Zehnder interferometer is being employed as the discriminator, by regulating the optical path length of one of its arms. Alternatively the feedback loop may be used to regulate the operation of the optical source, for instance, when an injection laser is being employed as the source, by regulating its mean drive current or its temperature.

The invention also provides a method of converting the frequency shift keyed (FSK) output signal of a digitally modulated optical source into an intensity modulated (IM) output signal by transmission of the signal through an optical discriminator, characterised in that a modulation is impressed upon the difference frequency between the high and low frequency bits of the FSK output signal to produce a phase-related intensity modulation of an optical output of the discriminator, which phase related intensity modulated output is employed in a feedback loop to regulate the spectral relationship between the centre frequency of the FSK optical output signal of the optical source and the frequency spectrum of the optical filter characteristic of the optical discriminator.

There follows a description of optical transmitters embodying the present invention in preferred forms, and a description of their operation which is compared with that of the transmitter of Bryant et al to which previous reference has been made. The description refers to the accompanying drawings in which:-

Figure 1 is a schematic diagram of a first optical transmitter embodying the present invention in a preferred form,

Figure 2 is a graph illustrating part of the spectral transmission characteristic of the Mach Zehnder interferometer that forms a part of the optical transmitter of Figure 1, and

Figure 3 is a schematic representation of a second transmitter embodying the present invention in a preferred form.

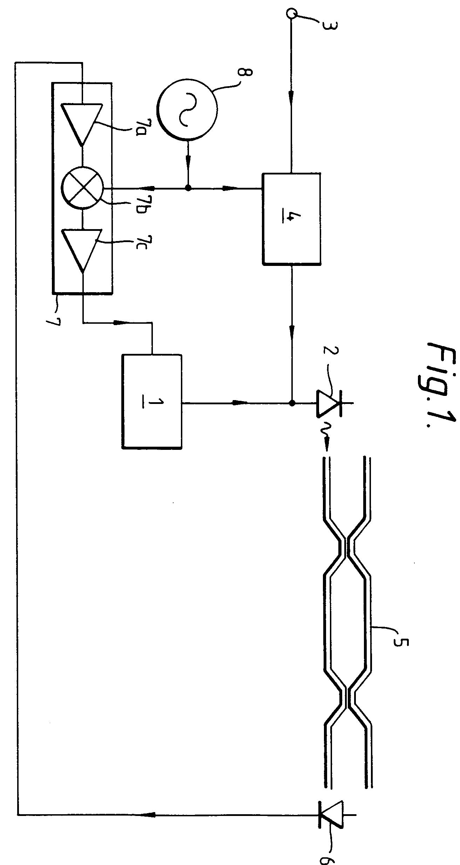

Referring to Figure 1, a current driver 1 supplies bias current to an injection laser 2. Binary data is applied to a terminal 3 which feeds an automatic gain control circuit 4 to provide a modulation current which is added to the bias current from driver 1 to drive the laser 2. The optical output of the laser 2 is fed into an optical fibre Mach Zehnder interferometer 5. This interferometer has two optical outputs, one of which is the optical output of the transmitter, and the other of which illuminates a monitor photodiode 6. The electrical output of the monitor photodiode 6 is applied to the signal input of a synchronous detector 7 comprising an input amplifier 7a, a mixer 7b and an output amplifier 7c. The phase reference input to the synchronous detector 7 is applied to its mixer 7b from a low frequency oscillator 8, which also applies a signal to the automatic gain control circuitry to modulate the value of gain that it provides. The output of output amplifier 7c of the synchronous detector 7 is fed to the bias current driver 1, where it is employed to regulate the magnitude of bias current provided by that driver. For a system operating with an FSK frequency difference of about 5GHz, a suitable difference in length of fibre in the two arms of the interferometer is typically of the order of 20 mm.

The lasing output frequency of the laser 2 depends upon the current flow through the laser. This current flow has two components, a steady component derived from the driver 1, and a data modulated component derived from the data input terminal 3. The magnitude of the steady component from the driver 1 determines the centre frequency of the laser output, while the amplitude of the current swing provided by automatic gain control circuit determines the magnitude of the frequency shift in the laser output between data bits of opposite data significance. When data is applied to terminal 3 in the absence of any modulating signal from the oscillator 8, the data 1 bits will produce a certain level of output power to be incident upon the monitor photodiode 6, while data 0 bits will produce another level that is normally different from the first. If the data is balanced code data, and the response of the photodiode is intrinsically slow enough, or its electrical output fed through a low pass filter, the output of the photodetector corresponds to a mean between the data 0 level and the data 1 level. An output from oscillator 8 will modulate the gain provided by the automatic gain control circuit 4 and hence the frequency difference between data 1 and data 0 bits. This in turn modulates the data 1 and data 0 output optical power levels incident upon the monitor photodiode. Provided that the oscillator 8 operates at a frequency low enough having regard to the response time of the monitor photodiode (including, if provided, its low pass filter), the modulation of the oscillator produces a modulation of the electrical output of the monitor photodiode whose modulation depth and phase with respect to the oscillator modulation depend, in a manner later to be described in detail, upon the value of the centre frequency in relation to the spectral transmission characteristics of the Mach Zehnder interferometer. The phase relationship is determined by means of the synchronous detector 7 to provide a feedback signal employed to regulate the magnitude of the current output provided by the driver 1 to maintain the centre frequency at a particular point in the Mach Zehnder characteristic for which power launched into one of its input ports at the centre frequency would be divided equally between its two output ports.

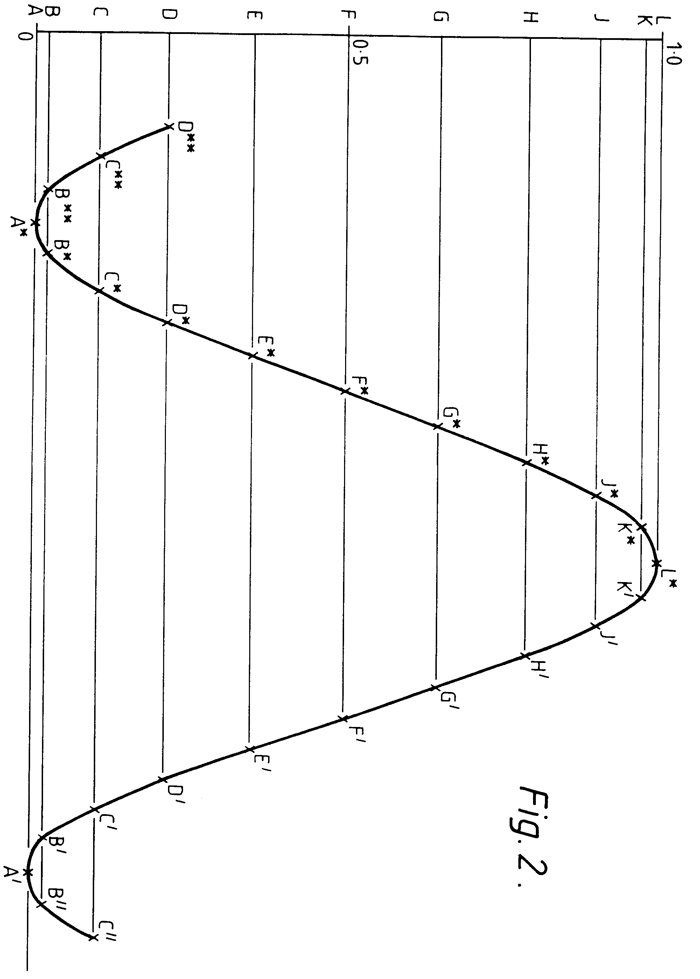

The optical transmitter of Figure 1 has a number of superficial similarities with the transmitter of E.G. Bryant et al to which previous reference has been made, but also a number of significant differences. A comparison of the two transmitters and their modes of operation will now be made in which reference is made to Figure 2.

Figure 2 is a graphical representation of the function $y = \sin^2 x$, and thus represents, as a function of frequency x, the proportion of the optical power input launched into one input point of a lossless and dispersionless Mach Zehnder interferometer that emerges from one of its output points.

A is the value of y when $x = 0$,
B is the value of y when $x = pi/10$,
C is the value of y when $x = 2pi/10$,
and so on by equal increments of x through D E F G H J and K to L,
where L is value of y when $x = pi$.

The optimum centre frequency for converting FSK into IM is a frequency that corresponds either to the operation point F* or the point F′, and the optimum frequency shift is that which provides negative and positive FSK frequencies corresponding to the operating points of A* and L*, or of L* and A′. Should however the centre frequency drift to a frequency corresponding to an operating point A* or L*, the interferometer will clearly produce no conversion of FSK into IM, because both FSK bits will produce the same intensity of optical power output from a single output port of the interferometer.

In the transmitter of E.G. Bryant et al the oscillator 8 of Figure 1 is employed to modulate the current output of driver 1 instead of the gain of the automatic gain control circuit 4, and the electrical output of the monitor photodiode 6 is fed via an envelope detector (not shown) to the input of the synchronous detector 7. Because this monitor photodiode is feeding an envelope detector, it must be capable of responding to the relatively high frequency of the bit rate.

Suppose by way of example the centre frequency, in the absence of the bias modulation provided by oscillator 8, provides a centre frequency corresponding to the operating point E* rather than to the optimum centre frequency operating point F*. Suppose also that the amplitude of the FSK was the optimum value for an optimum centre frequency operating point. In this case, with the centre frequency corresponding to the operating point E*, the negative and positive shift FSK frequencies correspond to the operating points B** and K* in the absence of any modulating signal from oscillator 8. The amplitude of the resulting envelope of the response of the monitor photodiode will be between levels B and K.

In the presence of a modulating signal from the oscillator 8 that temporarily raises the bias current provided by the driver 1 by an amount that temporarily raises the centre frequency from a value corresponding to the operating point E* to one corresponding to the operating point F*, the FSK frequencies will have values corresponding to the operating points A* and L*. The amplitude of the resulting envelope of the response of the monitor photodiode will now temporarily be enlarged from between levels B and K to between levels A and L. Later, when the oscillator 8 temporarily reduces the bias current provided by driver 1 by an amount that temporarily reduces the centre frequency to a value corresponding to the operating point D*, the FSK frequencies will be at values corresponding to the operating points C** and J*. The amplitude of the envelope is thereby diminished to between levels C and J, which is a smaller amplitude than that provided in the absence of a signal from oscillator 8. Thus it is seen that, with a centre frequency at a value corresponding to the operating point E* in the absence of a signal from oscillator 8, the imposition of such a signal to modulate the drive current provided by driver 1 produces a modulation of the amplitude of the envelope of the output of the monitor photodiode that is in phase with the drive current modulation provided by driver 1.

Repeating the analysis in respect of a centre frequency at a value corresponding to the operating point G* reveals that a similar amplitude modulation of the envelope is produced, but in this instance it is in antiphase with the drive current modulation provided by driver 1. The E.G. Bryant et al transmitter exploits this change in phase relationship between a centre frequency just beneath the optimum value corresponding to the operating point F* and a centre frequency just above the optimum value to provide a feedback control signal to stabilise the centre frequency at the optimum value. A drawback of this approach is that further analysis reveals that a similar change in phase relationship exists between a centre frequency just beneath the optimum value corresponding to the operating point F' and a centre frequency just above the optimum value. It can be verified that the envelope is in phase when the centre frequency is beneath the optimum frequency, for instance the frequency with a valuecorresponding to the operating point G', which is at a lower frequency than that of the optimum frequency which corresponds to the operating point F'; and that it is in antiphase when the centre frequency is above, for instance the frequency having a value corresponding to the operating point E'. Therefore this form of stabilisation can equally well operate to stabilise at a centre frequency corresponding to the operating point F' as to one corresponding to the operating point F*. Stabilising the centre frequency at one of these optimum frequencies produces the FSK to IM conversion in which the higher frequency FSK bit is converted to the higher intensity IM bit, whereas stabilisation of the centre frequency at the other ideal value will produce a reversal of roles in which the higher frequency FSK bit is converted to the lower intensity IM bit. The possibility of such role reversal occurring can be a significant problem.

Attention is now reverted to the transmitter embodying the present invention, and specifically as described with reference to Figure 1, in which the output of oscillator 8 is not applied to driver 1, but instead is applied to automatic gain control circuitry 4. Suppose, once again, that the centre frequency, in the absence of any signal from oscillator 8 to automatic gain control circuitry 4, is at a value corresponding to the operating point E*, rather than the optimum centre frequency corresponding to operating point F*. Suppose also that the amplitude of the output of the automatic gain control circuitry 4 provides an FSK amplitude that is optimum for an optimum centre frequency corresponding to the operating point F*. Under these circumstances the FSK frequencies will be values corresponding to the operating points B** and K*. The intensity of the light incident upon the monitor photodiode 6 will thus be switched between levels B and K, and therefore its average level will be level F.

In the presence of a modulating signal from oscillator 8 that temporarily increases the gain provided by the automatic gain control circuitry 4 so that the positive FSK frequency has a value corresponding to the operating point L* instead of the operating point K*, the negative FSK frequency will have a value corresponding to the operating point C** instead of the operating point B**. The intensity of the light incident upon the monitor photodiode will thus be switched between levels C and L, and therefore its average level will be slightly greater than level F. It can be correspondingly verified that, in the presence of a modulating signal from the oscillator that reduces the gain provided by the automatic gain control circuitry so that the FSK frequencies have values corresponding to the operating parts A* and J*, the average light level of light incident upon the monitor photodiode will be at a level slightly beneath level F. Thus it can be shown that, with centre frequency slightly beneath the optimum value that corresponds to the operating point F*, the modulation of the gain provided by the automatic gain control circuitry 4 produces a corresponding modulation of the average value of the level of light incident upon the monitor photodiode 6, and that this modulation is in phase with the modulation provided by oscillator 8.

Corresponding analysis of the situation in respect of similar modulation, when the centre frequency has a value slightly above the optimum frequency that corresponds to the operating point F*, reveals that the resulting modulation of the average level of the light incident upon the monitor photodiode is in antiphase with the modulation provided by oscillator 8.

Continuing the analysis, it can be shown that the modulation provided by oscillator 8 produces no modulation of the average level of the light incident upon the monitor photodiode when the centre frequency is at the optimum value corresponding to the operating point F*. Also it can be shown that the antiphase modulation, that is produced when the centre frequency is at a value above the optimum value that corresponds to the operating point F*, increases in amplitude as the centre frequency is increased to the value corresponding to the operating point L*, and that thereafter a further increase in the value of the centre frequency produces a progressive discrimination of that amplitude until it is once again reduced to zero at the centre frequency value corresponding to the point F'.

It is seen that, in the case of the transmitter of Figure 1, the feedback path provided by the connection between the output of the synchronous detector 7 and the bias current driver 1 necessarily determines whether the higher frequency FSK bits are converted to higher intensity IM bits or to lower intensity IM bits. This is according to which sign of output from the synchronous detector is operative to increase the magnitude of the bias current provided by the driver 1.

In the foregoing analyses of the operation of the transmitter of Figure 1 it was assumed that, in the absence of an output from the oscillator 8, the amplitude of the FSK was the optimum value for when the centre frequency is at an optimum value. Thus, if the optimum centre frequency is at a value corresponding to the operating point F*, the amplitude of the FSK was assumed to provide FSK frequencies with values corresponding to the operating points A* and L*. The analysis can be extended to show that the feedback will operate in the same manner when the amplitude of the FSK is not quite optimum, either being slightly larger than optimum or being slightly smaller than optimum. The slightly smaller than optimum situation can be analysed by considering for instance an FSK modulation that, in the absence of an output from the oscillator 8, produces a frequency difference whose corresponding operating points are separated by 4pi/5 on the x-axis of Figure 2 instead of by pi. Similarly, the slightly larger than optimum situation can be analysed by considering an FSK modulation producing a frequency difference whose corresponding operating points are separated by 6pi/5 on the x-axis of Figure 2 instead of by pi.

It is therefore possible to add to the transmitter of Figure 1 a second feedback control loop which will co-operate with the first so that, while the first operates to regulate the centre frequency, the second operates to regulate the FSK amplitude.

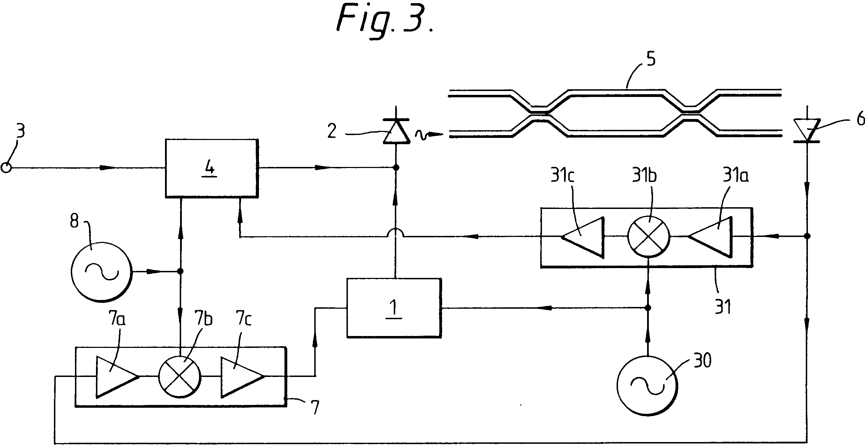

An example of such a transmitter incorporating a second feedback loop is depicted in Figure 3. This transmitter has all the components of the transmitter of Figure 1 (these being identified with the same index numerals as before), and additionally incorporates a second low frequency oscillator 30, operating at a different frequency from that of oscillator 8, and a second synchronous detector 31, comprising an input oscillator 31a, a mixer 31b and an output amplifier 31c.

In this instance the electrical output of the monitor photodiode 6 is applied not only to the signal input of synchronous detector 7, but also to that of synchronous detector 31. The phase reference input to the synchronous detector 31 is applied to its mixer 31b from the low frequency oscillator 30, which also applies a signal to the bias current driver 1 to modulate the amplitude of the bias current that it delivers. The output of output amplifier 31c of synchronous detector 31 is fed to the automatic gain control circuit 4 where is it employed to regulate the mean amplitude of the gain that this circuit provides.

To understand the operation of the second feedback loop, the loop that includes synchronous detector 31, it will be assumed by way of example that the output of synchronous detector 7 is being employed to regulate the mean bias current output of driver 1 to provide a centre frequency corresponding to the operating point F* in Figure 2. It will be additionally supposed that the amplitude of the output of oscillator 30 is such as to cycle the bias current provided by driver 1 between a maximum value providing a centre frequency corresponding to operating point G* and a minimum value providing a centre frequency corresponding to operating point E*. If the mean value of the gain provided by the automatic gain circuit 4 produces an FSK frequency difference whose corresponding operating points are separated by pi on the x-axis of Figure 2 (thereby providing the optimum FSK frequency difference for when the centre frequency is at its optimum value), then, while the oscillator 30 is temporarily maintaining the bias current provided by driver 1 at its lowest value (thereby providing a centre frequency corresponding to operating point G*), the mean values of the FSK frequencies correspond to operating points B* and K'. Under these conditions the intensity of the light incident upon the monitor photodiode 6 will be switched between levels B and K, and therefore the average level will be level F.

Changing the value of the output of oscillator 30 to that which temporarily maintains the bias current provided by drive 1 at its median value (thereby providing a centre frequency corresponding to operating point F*), changes the mean values of the FSK frequencies to those that correspond to operating points A* and L*. Under these conditions the intensity of the light incident upon the monitor photodiode 6 will be switched between levels A and L, and therefore the average level of this intensity will again be level F.

When the value of the output of the oscillator 30 temporarily maintains the bias current at its minimum value, the switching is between intensity levels B and K, with the result that yet again the average level of the intensity of light incident upon the monitor photodiode is still level F.

Thus, it is seen that, while the FSK frequency difference has a value whose corresponding operating points are separated by pi on the x-axis of Figure 2, modulation of the centre frequency about its optimum value (corresponding to the operating point F*), by virtue of the signal applied to driver 1 from oscillator 30, produces no corresponding modulation of the average level of the intensity of light incident upon the monitor photodiode.

Substitution of an FSK frequency difference having a value corresponding to operating points separated by 4pi/5 in the foregoing analysis will reveal that, with this reduced FSK frequency difference, the level of the intensity of light incident upon the monitor photodiode is switched between levels B and K while the bias current is at its minimum value (corresponding to operating point E*), is switched between levels A and J while the bias current is at its median value, and is switched between levels B and H while the bias current is at its maximum value. The average of levels B and H is less than the average of levels A and J, which in its turn is less than the average of levels B and K. In consequence it is seen that, if the FSK frequency difference has a value slightly less than the optimum value for operation with the optimum value of centre frequency, the modulation of that centre frequency about its optimum value by virtue of the signal applied to driver 1 from oscillator 30 produces a modulation of the average level of the intensity of light incident upon the monitor photodiode that in phase with the signal of oscillator 30.

Substitution of an FSK frequency difference having a value corresponding to operating points separated by 6pi/5, and again repeating the analysis, shows that if the FSK difference has a value slightly greater than the optimum value for operation with the optimum value of centre frequency, the modulation of that centre frequency about its optimum value by virtue of the signal applied to driver 1 from oscillator 30 produces a modulation of the average level of the intensity of light incident upon the monitor photodiode that is in antiphase with the signal of oscillator 30.

In the foregoing specific examples of Figures 1 and 3, regulation of the FSK centre frequency has been accomplished by regulation of the amplitude of the bias current applied to the laser 2. An alternative way of achieving this centre frequency regulation is to regulate the temperature of the laser, bearing in mind that, whereas an increase in bias current increases the centre frequency, an increase in temperature reduces the centre frequency.

**Claims**

1. An optical transmitter including an optical source (2) adapted to provide a frequency shift keyed (FSK) optical output in response to the application thereto of a digital modulating signal, which FSK output is fed through an optical discriminator (5) to convert the modulation of the optical output from FSK to intensity modulation (IM), which optical transmitter includes a feedback control loop adapted to regulate the spectral relationship between the centre frequency of the FSK optical output of the optical source and the frequency spectrum of the optical filter characteristic of the optical discriminator, characterised in that the feedback control loop includes means to impress an amplitude modulation upon the digital modulation signal applied to the optical source.

2. An optical transmitter as claimed in claim 1, wherein the feedback loop is adapted to regulate the centre frequency of the FSK optical output of the optical source.

3. An optical transmitter as claimed in claim 1 or 2, which transmitter includes a second feedback loop adapted to regulate, in relation to the optical filter characteristic of the optical discriminator, the magnitude of the frequency difference between the FSK data bits of opposite data significance.

4. An optical transmitter as claimed in claim 3 wherein the second feedback control loop includes means to modulate the operation of the optical source in such a way as to modulate the centre frequency of the FSK optical output.

5. An optical transmitter as claimed in any preceding claim wherein the optical discriminator is an optical fibre Mach Zehnder interferometer.

6. A method of converting the frequency shift keyed (FSK) output signal of a digitally modulated optical source into an intensity modulated (IM) output signal by transmission of the signal through an optical discriminator, characterised in that a modulation is impressed upon the difference frequency between the high and low frequency bits of the FSK output signal to produce a phase-related intensity modulation of an optical output of the discriminator, which phase related intensity modulated output is employed in a feedback loop to regulate the spectral relationship between the centre frequency of the FSK optical output signal of the optical source and the frequency spectrum of the optical filter characteristic of the optical discriminator.

7. A method as claimed in claim 6, wherein said phase-related intensity output is employed in the feedback loop to regulate the centre frequency of the optical source.

8. A method as claimed in claim 7, wherein the optical source is an injection laser, and the feedback loop regulates its centre frequency by regulation of the mean level of bias current applied to said laser.

9. A method as claimed in claim 7, wherein the optical source is an injection laser, and the feedback loop regulates its centre frequency by regulation of the temperature of the laser.

10. A method as claimed in any claim of claims 6 to 9, wherein said modulation that is impressed upon the difference frequency is accompanied by a second modulation at a different modulation frequency from said modulation impressed upon the difference frequency, which second modulation is impressed upon the centre frequency of the optical source to produce a phase-related intensity modulation, at said different modulation frequency, of an optical output of the discriminator that is employed in a second feedback loop to regulate the mean value of the difference frequency.

Fig.1.

Fig. 2.

Fig.3.